Europäisches Patentamt

European Patent Office

Office européen des brevets

(11) Veröffentlichungsnummer: **0 503 565 A2**

# (12) EUROPÄISCHE PATENTANMELDUNG

(21) Anmeldenummer: **92104096.0**

(51) Int. Cl.5: **C04B** 35/46, H01G 4/12

(22) Anmeldetag: **10.03.92**

(30) Priorität: **11.03.91 DE 4107795**

(43) Veröffentlichungstag der Anmeldung:
**16.09.92 Patentblatt 92/38**

(84) Benannte Vertragsstaaten:
**DE FR GB IT**

(71) Anmelder: **ROEDERSTEIN SPEZIALFABRIK
FÜR BAUELEMENTE DER ELEKTRONIK UND
KONDENSATOREN DER
STARKSTROMTECHNIK GmbH
Schillerstrasse 2
W-8300 Landshut(DE)**

(72) Erfinder: **Suttner, Alfred
Talstrasse 22 a
W-8403 Peising(DE)**
Erfinder: **Harpaintner, Alfons
Nussbaumstrasse 34
W-8307 Essenbach(DE)**

(74) Vertreter: **Huber, Bernhard, Dipl.-Chem. et al
Patentanwälte H. Weickmann, Dr. K. Fincke
F.A. Weickmann, B. Huber Dr. H. Liska, Dr. J.
Prechtel Kopernikusstrasse 9 Postfach 86 08
20
W-8000 München 86(DE)**

(54) **Keramik mit niedrigem Verlustfaktor.**

(57) Die Erfindung betrifft eine keramische Masse auf Titanatbasis mit niedrigem Verlustfaktor, insbesondere für Kondensatoren, welche dadurch gekennzeichnet ist, daß sie mit 0,005 bis 0,2 Gew.-% CuO dotiert ist sowie ein Verfahren zur ihrer Herstellung.

EP 0 503 565 A2

Die Erfindung betrifft eine Verringerung des Verlustfaktors in keramischen Massen für Kondensatoren durch Dotierung mit CuO.

Der Verlustfaktor oder Verlustwinkel tan$\delta$ eines Kondensators mit Dielektrikum ist u.a. von der Art des Dielektrikums, der Wechselstromfrequenz und der Temperatur abhängig. Er bestimmt, wie weit ein Kondensator vom Idealkondensator abweicht oder welcher Energieanteil bei Lade- und Entladevorgängen verlorengeht, d.h. in Wärme umgesetzt wird. Damit hängt die Eigenerwärmung eines Kondensatorelements direkt mit der Größe des Verlustfaktors zusammen. Auch die elektrische Festigkeit eines Kondensators (d.h. das Durchschlagsverhalten) ist vom Verlustfaktor abhängig, man denke an den sogenannten Wärmedurchschlag, der durch eine Verminderung des spezifischen Widerstands im Dielektrikum bei lokaler Überhitzung des Bauelements unter Beanspruchung ausgelöst wird. Hier spielen auch noch weitere Faktoren, wie die Homogenität der Masse und die Abhängigkeit des lokalen Verlustfaktors von der Temperatur und der Spannung eine Rolle.

Einer Verringerung des Verlustfaktors in Kondensatoren kommt somit eine zentrale Bedeutung zu. Geeignete Materialien als Dielektrika für Kondensatoren sind isolierende Werkstoffe, z.B. keramische Massen. Besonders geeignet sind oxidkeramische Werkstoffe auf Titanatbasis. Aufgabe der vorliegenden Erfindung ist es nun, keramische Massen für Kondensatoren mit möglichst geringen Verlustfaktoren für Kondensatoren zu entwickeln.

Überraschenderweise wurde nun gefunden, daß eine Dotierung mit geringsten Mengen von Cu-Verbindungen den Verlustfaktor einer keramischen Masse, sowie insbesondere den Anstieg des Verlustfaktors bei Temperaturen über 100°C erheblich verringern kann.

Ein Gegenstand der Erfindung ist daher eine keramische Masse auf Titanatbasis mit niedrigem Verlustfaktor für Kondensatoren ohne Korngrenzensperrschichten, insbesondere für Kondensatoren der Typen I oder II, die mit 0,005 bis 0,2 Gew.-% CuO dotiert ist.

Die erfindungsgemäße Keramikmasse eignet sich zur Verwendung als Dielektrikum für Kondensatoren ohne innere Korngrenzensperrschichten, insbesondere von Kondensatoren der Typen I oder II. Besonders bevorzugt wird die erfindungsgemäße Dotierung für Kondensatoren des Typs II verwendet. Gegenüber einer nicht mit Cu dotierten Masse findet man überraschenderweise eine starke Verringerung des Verlustfaktors ohne nennenswerte Beeinträchtigung anderer elektrischer Parameter.

Unter dem Begriff "Kondensatoren ohne (innere) Korngrenzensperrschichten" sind insbesondere Kondensatoren der Typen I und II zu verstehen (siehe z.B. Zinke und Seither: Widerstände, Kondensatoren, Spulen und ihre Werkstoffe, 2. Auflage (1982), Springer Verlag, Berlin, Heidelberg, New York). Im Gegensatz dazu stehen Kondensatoren des Typs III, d.h. Korngrenzen- oder Oberflächensperrschichtkondensatoren, bei denen durch Dotierung mit Cu keine Verbesserung von tan$\delta$ gefunden werden kann.

Vorzugsweise ist die erfindungsgemäße Keramikmasse mit 0,005 bis 0,1 Gew.-%, besonders bevorzugt mit 0,005 bis 0,05 Gew.-% CuO dotiert. Bei einer CuO-Dotierung von weniger als 0,005 Gew.-% CuO wird keine nennenswerte Verringerung des Verlustfaktors mehr gefunden. Bei Dotierungen von mehr als 0,2 Gew.-% CuO können Beeinträchtigungen anderer elektrischer Parameter der Keramikmasse, insbesondere der Dielektrizitätskonstante und der Kapazität auftreten.

Der Begriff "Dotierung mit CuO" im Sinne der vorliegenden Erfindung bedeutet nicht, daß ein Keramikkörper CuO als Verbindung enthalten muß. Ebenso kann die Cu-Dotierung in ein Kristallgitter oder eine Glasmatrix eingebettet vorliegen. Die Bezeichnung "CuO" beinhaltet somit keine eindeutige Zuordnung des Sauerstoffs. Demgemäß kann der erfindungsgemäße Keramikkörper anstelle der obigen Definition über die CuO-Konzentration auch direkt über die Cu-Konzentration definiert werden. Entsprechend der Molgewichte würden dann die entsprechenden Werte für die Cu-Dotierung 0,004 bis 0,16 Gew.-% Cu, vorzugsweise 0,004 bis 0,08 Gew.-% Cu und besonders bevorzugt 0,004 bis 0,04 Gew.-% Cu betragen.

Die erfindungsgemäße keramische Masse ist eine Keramik auf Titanatbasis, d.h. sie kann als Basis- oder Hauptkomponente Bariumtitanat, Calciumtitanat oder/und Strontiumtitanat enthalten. Vorzugsweise ist die Basiskomponente der Keramikmasse Bariumtitanat, wobei das Bariumtitanat insbesondere die tetragonale Perowskit-Modifikation aufweisen soll. Weiterhin bevorzugt sind erfindungsgemäße keramische Massen, bei denen der Bariumtitanatanteil mindestens 70 Gew.-% des Gesamtgewichts beträgt. Besonders bevorzugt sind auch Keramikmassen, bei denen es sich um HDK-Formulierungen handelt, d.h. um Formulierungen mit einer Dielektrizitätskonstante DK >200 (siehe z.B. Zinke und Seither, Widerstände, Kondensatoren, Spulen und ihre Werkstoffe, 2. Auflage, 1982, S. 182 ff, Springer Verlag, Berlin, Heidelberg, New York). Besonders bevorzugt sind Keramikmassen mit einer DK von etwa 900 bis 15000.

Durch Dotierung einer keramischen Masse mit CuO kann man den Verlustfaktor (tan$\delta$) bis auf die Hälfte des Ausgangswerts verringern. Im übrigen werden durch die Cu-Zugabe auch Sinterfähigkeit, Isolationswiderstand und Durchschlagsverhalten positiv beeinflußt. Insbesondere wird auch eine starke Verringerung des Verlustfaktors bei Temperaturen von über 80°C gefunden. Die Verringerung des Verlustfaktors tritt über den gesamten gemessenen Bereich der Wechselstromfrequenz von 100 Hz bis 10 MHz auf. Bei Zugabe größerer Mengen von Cu wird eine leichte Verringerung der Dielektrizitätskonstante und der Kapazität beobachtet.

Eine bevorzugte erfindungsgemäße Keramikmasse enthält als Basiskomponente Bariumtitanat. Bei reinem Bariumtitanat weist das Verhalten der Dielektrizitätskonstante in Abhängigkeit von der Temperatur, bei einer bestimmten Temperatur und Zusammensetzung ein Maximum der Dielektrizitätskonstante in Form eines scharfen Punktes auf, der als Curie-Punkt bezeichnet wird. Dieser Curie-Punkt kann durch Zusatz von Curie-Punkt-Modulatoren zur keramischen Masse verbreitert und nach Wunsch verschoben werden. Auch erfindungsgemäße keramische Massen können vorzugsweise neben der Titanatkomponente zusätzlich einen oder mehrere solche Curie-Punkt-Modulatoren enthalten. Derartige Curie-Punkt-Modulatoren sind einem Fachmann auf dem Gebiet der Keramikkondensatoren bekannt und zwar sowohl hinsichtlich ihrer Eigenschaften, den Curie-Punkt zu verschieben als auch zu verbreitern. Curie-Punkt-Modulatoren, die für erfindungsgemäße keramische Massen besonders geeignet sind, sind z.B. Strontiumtitanat, Calciumzirkonat, Bariumzirkonat, Bariumstannat, Wismutoxid und Bleititanat.

Die erfindungsgemäße keramische Masse kann zusätzlich auch Mineralisatoren enthalten, welche das Korngefüge steuern, beispielsweise Aluminiumoxid und Zirkoniumoxid, sowie Sinterhilfsmittel wie z.B. Bentonit. Weitere Mineralisatoren und Sinterhilfsmittel, die der Fachwelt bekannt sind, können ebenfalls verwendet werden. Die Gewichtsanteile der Curie-Punkt-Modulatoren, Mineralisatoren oder Sinterhilfsmittel am Gesamtgewicht der Keramikmasse können innerhalb der für Keramikmassen üblichen Bereiche gewählt werden. Vorzugsweise betragen diese Gewichtsanteile weniger als 30 % bezogen auf das Gesamtgewicht der keramischen Masse. Die durch die CuO-Dotierung bedingte Verringerung des Verlustfaktors wird dabei bei Verwendung der oben genannten Substanzen nicht beeinträchtigt.

Die erfindungsgemäßen Keramikmassen enthalten besonders bevorzugt als weiteren Bestandteil eine oder mehrere Seltenerdverbindungen, beispielsweise Ceroxid oder Lanthantitanat. Bei Zusätzen von Seltenerdverbindungen wird eine besonders starke Verringerung des Verlustfaktors gefunden. Geeignete Verbindungen sind Lanthan-, Cer-, Praseodym-, Neodym-, Promethium-, Samarium-, Europium-, Gadolinium-, Terbium-, Dysprosium-, Holmium-, Erbium-, Thulium-, Ytterbium- und Lutetium-Verbindungen. Dabei werden die Seltenerdverbindungen dem Ausgangsmaterial für die Herstellung der Keramikmasse vorzugsweise in Form von Oxiden, Titanaten oder/und Zirkonaten zugesetzt. Vorzugsweise enthält eine erfindungsgemäße keramische Masse nicht nur eine, sondern ein Gemisch von mehreren Seltenerdverbindungen.

Weiterhin ein Gegenstand der vorliegenden Erfindung ist ein Verfahren zur Verringerung des Verlustfaktors in Kondensatoren ohne Korngrenzensperrschichten mit einer keramischen Masse auf Titanatbasis als Dielektrikum, wobei man einen Grünkörper für eine keramische Masse erzeugt und diesen anschließend einem Sinterprozeß unterwirft, wobei vor dem Sinterprozeß Cu-Verbindungen zugesetzt und homogen in der keramischen Masse verteilt werden, so daß die gesinter-terte bzw. gebrannte keramische Masse eine Dotierung von 0,005 bis 0,2 Gew.-% CuO (bzw. 0,004 bis 0,16 Gew.-% Cu), vorzugsweise 0,005 bis 0,1 Gew.-% CuO (bzw. 0,004 bis 0,08 Gew.-% Cu), besonders bevorzugt 0,005 bis 0,05 Gew.-% CuO (bzw. 0,004 bis 0,04 Gew.-% Cu) enthält. Die Herstellung der Grünkörper für die erfindungsgemäßen Keramiken ist nicht kritisch. Sie kann nach allen üblichen Verfahren erfolgen, beispielsweise durch Pressen, Folienguß, Schlickerguß etc.. Dabei ist jedoch zu beachten, daß die Cu-Dotierung möglichst homogen in der Keramikmasse dispergiert ist. Die anschließende Sinterbehandlung der Grünkörper kann an Luft erfolgen, jedoch sind auch andere sauerstoffhaltige oder sauerstofffreie Atmosphären geeignet, wie sie bei der Keramikherstellung üblich sind. Auch die Brenntemperatur (Sintertemperatur) der Keramikmasse ist nicht kritisch. Es haben sich Brenntemperaturen als geeignet erwiesen, wie sie auch für bereits bekannte Keramikmassen auf Titanatbasis verwendet werden (z.B. 1300 ° C bis 1600 ° C).

Die Herstellung von Grünkörpern für erfindungsgemäße Keramikmassen kann beispielsweise durch Aufmahlen der Komponenten und Plastifizieren erfolgen. Hierfür werden die Rohstoffe beispielsweise in einer Kugelmühle unter Zugabe von Wasser oder Alkohol und Zugabe von geeigneten Mahlkörpern (Aluminiumoxid-, Zirkoniumoxidkugeln) eingewogen. Weiterhin werden Dispergiermittel und Plastifizierungsmittel wie z.B. eine 10 %ige wäßrige Lösung eines Polyvinylalkohols zugegeben. Der Polyvinylalkohol kann aber auch gegen Ende des Mahlvorgangs, der typischerweise einige Stunden beträgt, zugegeben werden. Beim Aufmahlen werden Agglomerate zerstört, die Korngröße verringert und ein intensives Mischen der einzelnen Bestandteile erreicht. Dieser Prozeß ist dabei nicht auf die beschriebenen Kugelmühlen beschränkt und läßt sich z.B. auch in Attritormühlen, im Durchlauf oder dem sogenannten "Batch-Betrieb" durchführen. Durch das Vermahlen wird ein feinteiliges Material erzeugt, dessen mittlere Korngröße günstigerweise unterhalb 10 $\mu$m, vorzugsweise unterhalb 3 $\mu$m liegen sollte. Die mittlere Korngröße der Bestandteile kann jedoch auch unterhalb 1 $\mu$m liegen.

Es ist nicht erforderlich, daß bei der Herstellung von Keramikkörpern durch Mahlen und Plastifizieren die Dotierung mit Kupfer in Form einer Zugabe von festem CuO erfolgt, sondern man kann Kupfer auch in Form von Cu-Verbindungen einbringen, die sich bei hohen Temperaturen (>1000°C) zu CuO zersetzen (z.B. Cu-Carbonat, Cu-Hydroxid, Cu-Acetat). Besonders bevorzugt ist dabei auch ein Herstellungsverfahren für erfindungsgemäße keramische Massen, bei dem die Dotierung mit Cu-Ionen in Form der Zugabe einer wäßrigen Cu-Salzlösung, insbesondere einer Cu-Acetatlösung erfolgt. Auf diese Weise ist es möglich, eine bessere Homogenität der Cu-Dotierung zu erzielen. Die Zugabe von wäßrigen Cu-Salzlösungen erfolgt zweckmäßig während der Plastifizierung der keramischen Masse, um die Bildung von Mikroorganismen zu vermeiden.

Daneben kann die Herstellung der Grünkörper für die erfindungsgemäßen Keramikmassen auch durch naßchemische Verfahren erfolgen. Ein Beispiel hierfür ist die Co-Präzipitation von verschiedenen Salzen aus einem wäßrigen oder organischen Medium. Ein Beispiel hierfür ist das Carbonat-Verfahren, bei dem lösliche Barium- und Titansalze zusammen mit einem Kupfersalz (und gegebenenfalls Salzen von weiteren Bestandteilen der Keramikmasse) aus einer wäßrigen Lösung durch Zugabe von Ammoniumcarbonat in Form von schwerlöslichen Carbonaten ausgefällt werden. Ein weiteres Beispiel ist das Oxalat-Verfahren, bei dem durch Zugabe von Oxalsäure zu einer wäßrigen Salzlösung Bariumtitanyloxalat ausgefällt wird. Dieses Verfahren ist insbesondere zur Co-Präzipitation von Dotierungsbestandteilen geeignet, wobei z.B. Erdalkalititanate, Erdalkalizirkonate, Blei und Seltene Erden sowie natürlich auch Kupfer ausgefällt werden können. Ein weiteres Verfahren ist die Schlickerfällung, wobei eine feinteilige pulverförmige Komponente (z.B. $TiO_2$) in der Lösung eines oder mehrerer Zuschlagsstoffe (z.B. $BaCl_2$, $CuCl_2$) suspendiert wird. Der hierbei entstehende Schlicker kann durch Zugabe eines geeigneten Fällungsmittels (z.B. ein Carbonat) ausgefällt werden. Das Prinzip dieser drei Verfahren ist bei Bauer et al. (Technologie und Anwendung von Ferroelektrika (1976), Seiten 107 bis 109, Akad. Verlagsgesellschaft Leipzig) beschrieben. Der durch die Co-Präzipitation resultierende Niederschlag kann durch thermische Zersetzung und anschließendes Sintern zu einer erfindungsgemäßen Keramikmasse weiterverarbeitet werden.

Ebenfalls geeignet zur Herstellung erfindungsgemäßer Keramikmassen ist das Sol-Gel-Verfahren. Dieses Verfahren ist bevorzugt, da das resultierende Produkt hohe chemische Reinheit und eine hohe Sinterreaktivität besitzt. Weitere Vorteile sind die kleinen Korngrößen sowie die enge Korngrößenverteilung des resultierenden Materials. Überdies kann eine Zugabe von Dotierungen bei guter chemischer Homogenität in beliebiger Menge erfolgen. Das Sol-Gel-Verfahren ist beispielsweise bei Passing et al. (Loseblattwerk "Technische, keramische Werkstoffe", herausgegeben von Prof Dr. J. Kriegsmann, Verlagsgruppe Deutscher Wirtschaftsdienst, Köln 1990/91) beschrieben. Dabei werden Gele aus Titanalkoxiden (z.B. Tetrabutyltitanat), löslichen, thermisch zersetzbaren Salzen (z.B. Bariumacetat, Kupferacetat) und Essigsäure, Isopropanol und Wasser hergestellt. Anschließend wird das Gel erhitzt, wobei die flüchtigen Bestandteile bei Temperaturen von 20 bis 250°C abdampfen und die thermische Zersetzung weiterer organischer Bestandteile (z.B. Acetat) bei etwa 200 bis 400°C erfolgt. Das resultierende Pulver kann dann auf übliche Weise zu einem Grünkörper verpreßt und dann gesintert werden.

Eine weitere Möglichkeit zur Herstellung von erfindungsgemäßen Keramikmassen ist die hydrothermische Synthese, die von Dawson (Ceramic Bulletin, 67 (1988), 1673 bis 1678) beschrieben ist. Dieses Verfahren ist dadurch gekennzeichnet, daß eine Stammlösung aus den verschiedenen Bestandteilen hergestellt wird, die unter Druck bis 15 mPa einer Temperatur von 100 bis 350°C ausgesetzt wird. Nach einer Verweildauer von 5 bis 60 Minuten erfolgt eine Druckverringerung und die Gewinnung des Produkts durch Filtration, Waschen und Trocknen. Das resultierende Pulver kann anschließend zu einer Keramikmasse weiterverarbeitet werden.

Ferner kann die Cu-Dotierung der erfindungsgemäßen keramischen Masse auch durch Zugabe von $Cu_2O$ oder anderen Cu-I-Verbindungen erfolgen, da $Cu_2O$ bei höheren Temperaturen und in Anwesenheit von Sauerstoff zu CuO oxidiert wird.

Die vorliegende Erfindung beinhaltet im weiteren auch die Verwendung einer erfindungsgemäßen keramischen Masse für Kondensatoren ohne Korngrenzensperrschichten, besonders bevorzugt für Kondensatoren des Typs II.

Die nachfolgenden Beispiele sollen die Erfindung in Verbindung mit den Abbildungen 1, 2 und 3 näher erläutern.

Abb. 1     zeigt die Temperaturabhängigkeit von Kapazität und Verlustfaktor von undotierten und dotierten $BaTiO_3$-Keramikmassen.

Abb. 2     zeigt die Temperaturabhängigkeit von Kapazität und Verlustfaktor von undotierten und dotierten $BaTiO_3$/$BaZrO_3$/$PbTiO_3$/$LaTiO_3$/$CeO_2$-Keramikmassen.

Abb. 3     zeigt die Temperaturabhängigkeit von Kapazität und Verlustfaktor von undotierten und dotierten $BaTiO_3$/$BaZrO_3$/$CeO_2$/$LaTiO_3$/Bentonit-Keramikmassen.

**Beispiel 1**

CuO-Dotierung einer BaTiO$_3$-Keramikmasse

Ausgehend vom Standard-Fertigungsversatz für eine Keramikmasse aus reinem (handelsüblichen) BaTiO$_3$ (C34) wurden Dotierungen mit CuO mit einer Menge von 0,025 %, 0,05 % bzw. 0,1 % (C35, C36, C37) bei unterschiedlichen Brenntemperaturen untersucht.

Tabelle 1 zeigt einen Vergleich der elektrischen Parameter von keramischen Massen als Dielektrika für Kondensatoren für eine Dotierung mit CuO und undotiert. Die Versätze C35, C36 und C37 sind abgesehen von einer Dotierung mit CuO aus dem gleichen Material wie der Standard-Versatz C34. Das Ausgangsmaterial wurde 16 h lang auf eine mittlere Teilchengröße < 2 $\mu$m vermahlen. Eine homogene Vermischung von CuO im BaTiO$_3$ wurde durch das gleichzeitige Aufmahlen aller Bestandteile in der Kugelmühle erreicht. Die Grünkörper wurden nach Zusatz von Plastifizierungsmitteln in Tablettenpressen zu Scheiben ovn ca. 10 mm Durchmesser und 1 mm Dicke verpreßt (Preßdruck 250 N/mm$^2$). Die Brenntemperaturen der Grünkörper betrugen 1425°C bzw. 1460°C (Meßstelle außerhalb des Ofenkanals), die Scheibendicke der resultierenden Keramikmassen betrug jeweils 1 mm.

Als elektrische Parameter wurden der Verlustfaktor tan$\delta$ und die Dielektrizitätskonstante (DK) untersucht. Die Messungen für DK und tan$\delta$ wurden an je 3 Kondensatorenstapeln zu je 10 Stück ermittelt. Diese und folgende Tabellen geben jeweils für jede untersuchte Keramikmasse Maximalwerte (oben), Mittelwerte (mitte) und Minimalwerte (unten) für tan$\delta$ und den Mittelwert für DK an.

Aus Tabelle 1 ist ersichtlich, daß der Verlustfaktor (tan$\delta$) durch die CuO-Dotierung deutlich abfällt. Durch die CuO-Dotierung wird auch ein geringer Rückgang der Dielektrizitätskonstante gefunden.

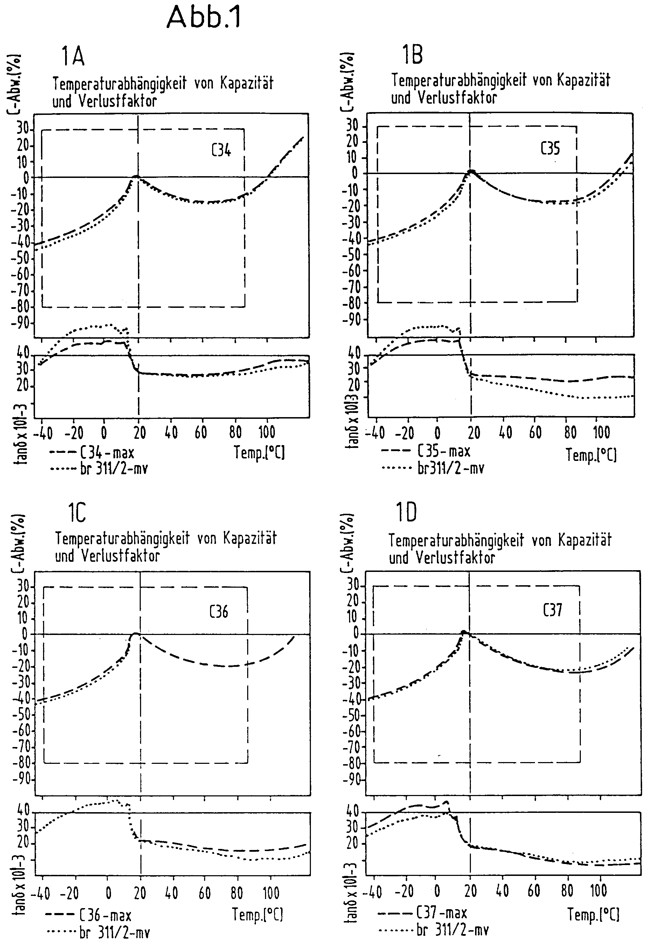

Abbildung 1 zeigt die Temperaturabhängigkeit von Kapazität und Verlustfaktor der obigen Keramikmassen in einem Temperaturbereich von -40°C bis 125°C. Abbildung 1A stellt den Temperaturgang für die undotierte Masse C34 dar, während die Abbildungen 1B, 1C und 1D den Temperaturgang für die Massen C35, C36 bzw. C37 darstellen. Aus Abbildung 1 ist ersichtlich, daß der Verlustfaktor der untersuchten Keramikmassen durch die Dotierung mit CuO stark verringert wird. Dieser Rückgang des Verlustfaktors ist insbesondere bei Temperaturen oberhalb +20°C bemerkenswert.

Die angegebenen Werte für den Verlustfaktor beziehen sich (auch in den nachfolgenden Beispielen) auf eine Temperatur von 25°C und eine Wechselstromfrequenz von 1 kHz. Messungen des Verlustfaktors bei einer Wechselstromfrequenz von 100 kHz erbrachten jeweils analoge Ergebnisse.

Tabelle 1

Elektrische Parameter einer BaTiO$_3$-Keramikmasse mit und ohne Zusatz von CuO (Dicke ~ 1 mm)

| Masse: | C34 | C35 | C36 | C37 |
|---|---|---|---|---|
| CuO-Dotierung: | - | 0,025 % | 0,05 % | 0,1 % |
| **A) Brenntemperatur 1420°C** | | | | |
| tanδ (x 10$^{-3}$) | 33,0 | 25,0 | 25,0 | 33,0 |
| | 29,1 | 21,3 | 20,2 | 22,2 |
| | 23,0 | 19,0 | 17,0 | 15,0 |
| DK (Mittelwert) | 1926 | 1689 | 1642 | 1661 |
| n (Anzahl der Prüflinge) | 30 | 30 | 30 | 30 |
| **B) Brenntemperatur 1465°C** | | | | |
| tanδ (x 10$^{-3}$) | 48,4 | 24,1 | 19,3 | 33,2 |
| | 38,9 | 21,6 | 18,6 | 24,6 |
| | 29,3 | 19,1 | 17,7 | 16,3 |
| DK (Mittelwert) | 2094 | 1931 | 1899 | 1919 |
| n (Anzahl der Prüflinge) | 9 | 9 | 9 | 9 |

Das zur Herstellung der obigen Keramikmassen verwendete BaTiO$_3$ wies nach chemischer Analyse eine Zusammensetzung wie folgt auf (alle Prozentangaben beziehen sich auf das Gewicht):

Al$_2$O$_3$ 0,09 %; CaO 0,08 %; Fe$_2$O$_3$ 0,02 %; K$_2$O 0,03 %;
Na$_2$O 0,05 %; SO$_3$ 0,10 %; SiO$_2$ 0,15 %; SrO 0,67 %;
TiO$_2$ 34,5 %; BaO 64,5 %.

**Beispiel 2**

CuO-Dotierung einer $BaTiO_3$ /$SrTiO_3$ /$CaZrO_3$-Keramikmasse

Ausgehend vom Standardfertigungsversatz für eine $BaTiO_3$/$SrTiO_3$/$CaZrO_3$-Keramikmasse (C38) wurden Dotierungen mit CuO mit einer Menge von 0,025 %, 0,05 % bzw. 0,1 % (C39, C40 bzw. C41) untersucht.

Zur Herstellung der Keramikmassen wurden die Bestanteile in den in Tabelle 2 angegebenen Mengen miteinander vermischt und 14 Stunden lang auf eine Teilchengröße < 2 $\mu$m vermahlen. Der Grünkörper wurde wie in Beispiel 1 hergestellt. Die Brenntemperatur war 1465°C.

Aus Tabelle 2 ist ersichtlich, daß sich der Verlustfaktor $\tan\delta$ durch die CuO-Dotierung deutlich verringert. Auch hier wird durch die CuO-Dotierung eine Verringerung der Dielektrizitätskonstante beobachtet.

Tabelle 2

Elektrische Parameter einer BaTiO$_3$/SrTiO$_3$/CaZrO$_3$-Keramikmasse mit und ohne Zusatz von CuO (Dicke ~ 1 mm)

| Masse: | C38 | C39 | C40 | C41 |
|---|---|---|---|---|
| CuO-Dotierung | - | 0,025 % | 0,05 % | 0,1 % |
| tanδ (25°C) | 9,0 | 8,0 | 8,2 | 8,0 |
| (x 10$^{-3}$) | 8,0 | 7,8 | 7,2 | 6,8 |
| | 7,0 | 7,0 | 7,0 | 6,0 |
| DK (Mittelwert) | 9177 | 9591 | 9867 | 10766 |
| n (Anzahl der Prüflinge) | 28 | 29 | 28 | 29 |

Die Keramikmasse C38 enthält 468 Gew.-Teile BaTiO$_3$, 66 Gew.-Teile SrTiO$_3$ und 66 Gew.-Teile CaZrO$_3$. Die Massen C39, C40 und C41 unterscheiden sich durch die Zugabe von CuO in den jeweils angegebenen Mengen.

**Beispiel 3**

CuO-Dotierung einer BaTiO$_3$ /BaZrO$_3$ /PbTiO$_3$ /LaTiO$_3$ /CeO$_2$-Keramikmasse

Ausgehend vom Standardfertigungsversatz für eine Keramikmasse mit den obigen Bestandteilen (60-33) wurden Dotierungen mit CuO mit einer Menge von 0,02 %, 0,04 % bzw. 0,06 % (60-34, 60-35 bzw. 60-36) untersucht.

Die Bestandteile der Keramikmasse wurden in den in Tabelle 3 angegebenen Mengen miteinander vermischt und 12 Stunden vermahlen. Die Herstellung der Grünkörper erfolgte wie in Beispiel 1 und 2. Die Brenntemperatur war 1400°C.

Tabelle 3 zeigt wiederum, daß durch die Dotierung mit CuO eine starke Abnahme des Verlustfaktors tan$\delta$ sowie eine geringe Abnahme der Dielektrizitätskonstante gefunden wird.

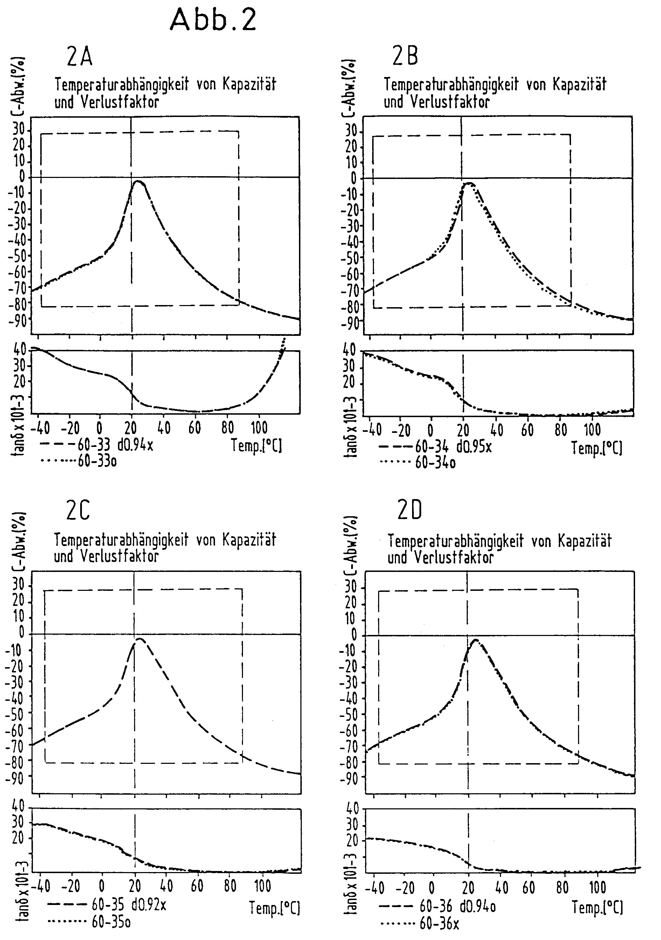

Abbildung 2 zeigt die Temperaturabhängigkeit von Kapazität und Verlustfaktor der obigen Keramikmassen in einem Temperaturbereich von -40°C bis 125°C. Abbildung 2A stellt den Temperaturgang für die undotierte Masse 60-33 dar, während die Abbildungen 1B, 1C und 1D den Temperaturgang für die Massen 60-34, 60-35 bzw. 60-36 darstellen. Aus Abbildung 2 ist ersichtlich, daß der Verlustfaktor der untersuchten Keramikmassen durch die Dotierung mit CuO über den gesamten Temperaturbereich verringert wird. Insbesondere wird bei mit CuO dotierten Keramikmassen kein Anstieg des Verlustfaktors bei Temperaturen oberhalb +80°C gefunden.

T a b e l l e   3

Elektrische Parameter einer BaTiO₃/BaZrO₃/PbTiO₃/LaTiO₃/CeO₂-Keramikmasse mit und ohne Zusatz von CuO
(Dicke ~ 0,95 mm)

| Masse: | 60-33 | 60-34 | 60-35 | 60-36 |
|---|---|---|---|---|
| CuO-Dotierung: | – | 0,02 % | 0,04 % | 0,06 % |
| $\tan\delta$: | 8,0 | 6,0 | 5,0 | 4,0 |
| ($\times 10^{-3}$) | 7,8 | 5,6 | 4,7 | 4,0 |
|  | 7,0 | 5,0 | 4,0 | 4,0 |
| DK (Mittelwert) | 10789 | 10633 | 9389 | 9755 |
| n (Anzahl der Prüflinge) | 30 | 30 | 30 | 30 |

Die Keramikmasse 60-33 enthält 522 Gew.-Teile BaTiO₃, 14 Gew.-% Teile BaZrO₃, 12 Gew.-Teile PbTiO₃, 0,625 Gew.-Teile CeO₂ und 25 Gew.-Teile LaTiO₃. Die Massen 60-34, 60-35 und 60-36 unterscheiden sich durch die Zugabe von CuO in den jeweils angegebenen Mengen.

**Beispiel 4**

CuO-Dotierung einer BaTiO₃ /BaZrO₃ /CeO₂ /LaTiO₃ /Bentonit-Keramikmasse

10

Ausgehend vom Standardfertigungsversatz für eine Keramikmasse mit den obigen Bestandteilen (60-30/1) wurden Dotierungen mit CuO mit einer Menge von 0,02 % und 0,04 % (60-37 und 60-38) untersucht.

Die Herstellung der Keramikmassen erfolgte entsprechend Beispiel 3.

Aus Tabelle 4 ist ersichtlich, daß auch hier durch die Dotierung mit CuO eine Abnahme des Verlustfaktors tanδ gefunden wird. Es wird ebenfalls ein leichter Rückgang der Dielektrizitätskonstante beobachtet.

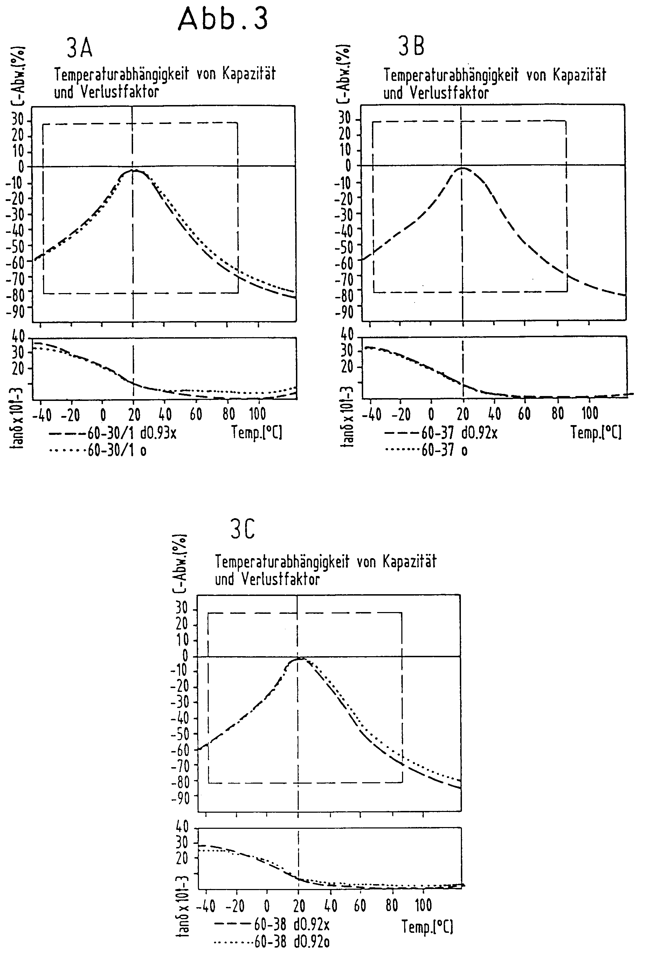

Abbildung 3 zeigt die Temperaturabhängigkeit von Kapazität und Verlustfaktor der obigen Keramikmassen in einem Temperaturbereich von -40°C bis 125°C. Abbildung 3A stellt den Temperaturgang für die undotierte Masse 60-30/1 dar, während die Abbildungen 3B und 3C den Temperaturgang für die Massen 60-37 und 60-38 darstellen. Aus Abbildung 3 ist ersichtlich, daß der Verlustfaktor der untersuchten Keramikmassen durch die Dotierung mit CuO insbesondere bei Temperaturen oberhalb +20°C stark verringert wird.

**Tabelle 4**

Elektrische Parameter einer $BaTiO_3/BaZrO_3/CeO_2/LaTiO_3/$Bentonit-Keramikmasse mit und ohne Zusatz von CuO (Dicke ~ 0,92 mm)

| Masse | 60-30/1 | 60-37 | 60-38 |
|---|---|---|---|
| CuO-Dotierung | – | 0,02 % | 0,04 % |
| $\tan\delta$ ($\times 10^{-3}$) | 9,0 | 7,0 | 6,0 |
|  | 9,0 | 6,6 | 5,3 |
|  | 8,0 | 6,0 | 5,0 |
| DK (Mittelwert) | 7760 | 7559 | 7309 |
| n (Anzahl der Prüflinge) | 30 | 30 | 30 |

Die Keramikmasse 60-30/1 enthält 522 Gew.-Teile $BaTiO_3$, 14 Gew.-Teile $BaZrO_3$, 0,62 Gew.-Teile $CeO_2$, 24 Gew.-Teile $LaTiO_3$ und 3 Gew.-Teile Bentonit als Sinterhilfe. Die Massen 60-37 und 60-38 unterscheiden sich durch die Zugabe von CuO in den jeweils angegebenen Mengen.

## Patentansprüche

1. Keramische Masse auf Titanatbasis mit niedrigem Verlustfaktor für Kondensatoren ohne Korngrenzensperrschichten, insbesondere für Kondensatoren der Typen I oder II,
**dadurch gekennzeichnet,**
daß die keramische Masse mit 0,005 bis 0,2 Gew.-% CuO dotiert ist.

2.  Keramische Masse nach Anspruch 1,
    **dadurch gekennzeichnet,**
    daß sie mit 0,005 bis 0,05 Gew.-% CuO dotiert ist.

3.  Keramische Masse nach Anspruch 1 oder 2,
    **dadurch gekennzeichnet,**
    daß sie als Basiskomponente Bariumtitanat, vorzugsweise in der Perowskit-Modifikation enthält.

4.  Keramische Masse nach Anspruch 3,
    **dadurch gekennzeichnet,**
    daß der Anteil von Bariumtitanat mindestens 70 Gew.-% bezogen auf das Gesamtgewicht der Masse beträgt.

5.  Keramische Masse nach einem der Ansprüche 1 bis 4,
    **dadurch gekennzeichnet,**
    daß sie eine Dielektrizitätskonstante (DK) mit einem Wert von mehr als 200 besitzt.

6.  Keramische Masse nach Anspruch 5,
    **dadurch gekennzeichnet,**
    daß die Dielektrizitätskonstante (DK) einen Wert im Bereich von 900 bis 15000 aufweist.

7.  Keramische Masse nach einem der vorhergehenden Ansprüche,
    **dadurch gekennzeichnet,**
    daß sie zusätzlich einen oder mehrere Curie-Punkt-Modulatoren enthält.

8.  Keramische Masse nach Anspruch 7,
    **dadurch gekennzeichnet,**
    daß die Curie-Punkt-Modulatoren aus der Gruppe, bestehend aus Strontiumtitanat, Calciumzirkonat, Bariumzirkonat, Bariumstannat, Wismutoxid und Bleititanat ausgewählt sind.

9.  Keramische Masse nach einem der vorhergehenden Ansprüche,
    **dadurch gekennzeichnet,**
    daß sie zusätzlich einen oder mehrere Mineralisatoren, insbesondere Aluminiumoxid oder/und Zirkoniumoxid, enthält.

10. Keramische Masse nach einem der vorhergehenden Ansprüche,
    **dadurch gekennzeichnet,**
    daß sie zusätzlich eine oder mehrere Sinterhilfen, insbesondere Bentonit, enthält.

11. Keramische Masse nach einem der vorhergehenden Ansprüche,
    **dadurch gekennzeichnet,**
    daß sie zusätzlich eine oder mehrere Seltenerdverbindungen wie Lanthan-, Cer-, Praseodym-, Neodym-, Promethium-, Samarium-, Europium-, Gadolinium-, Terbium-, Dysprosium-, Holmium-, Erbium-, Thulium-, Ytterbium- und Lutetium-Verbindungen enthält.

12. Keramische Masse nach Anspruch 11,
    **dadurch gekennzeichnet,**
    daß die Seltenerdmetalle in Form von Oxiden, Titanaten oder/und Zirkonaten vorliegen.

13. Verfahren zur Verringerung des Verlustfaktors in Kondensatoren ohne Korngrenzensperrschichten mit einer keramischen Masse auf Titanatbasis als Dielektrikum, wobei man einen Grünkörper für eine keramische Masse herstellt und diesen anschließend einem Sinterprozeß unterwirft,
    **dadurch gekennzeichnet,**
    daß vor dem Sinterprozeß Cu-Verbindungen in solcher Menge zugesetzt und homogen in der keramischen Masse verteilt werden, so daß die keramische Masse in gesintertem Zustand eine Dotierung von 0,005 bis 0,2 Gew.-% CuO enthält.

14. Verfahren nach Anspruch 13,

**dadurch gekennzeichnet,**

daß man eine keramische Masse herstellt, die eine Dotierung von 0,005 bis 0,05 Gew.-% CuO enthält.

15. Verfahren nach Anspruch 13 oder 14,

**dadurch gekennzeichnet,**

daß die Herstellung des Grünkörpers für die keramische Masse durch Vermahlen und Plastifizieren erfolgt.

16. Verfahren nach einem der Ansprüche 13 bis 15,

**dadurch gekennzeichnet,**

daß die Zugabe von Cu-Verbindungen in Form von festem CuO oder in Form von solchen Cu-Verbindungen erfolgt, die sich bei erhöhten Temperaturen zu CuO zersetzen.

17. Verfahren nach einem der Ansprüche 13 bis 16,

**dadurch gekennzeichnet,**

daß man für die Herstellung des Grünkörpers teilchenförmige Bestandteile verwendet, die eine Korngröße von weniger als 10 $\mu$m, vorzugsweise weniger als 3 $\mu$m besitzen.

18. Verfahren nach einem der Ansprüche 13 bis 17,

**dadurch gekennzeichnet,**

daß man Cu-Verbindungen in Form von wäßrigen Cu-Salzlösungen zugibt.

19. Verfahren nach Anspruch 18,

**dadurch gekennzeichnet,**

daß man die Cu-Verbindungen in Form einer wäßrigen Cu-Acetat-Lösung zugibt.

20. Verfahren nach Anspruch 18 oder 19,

**dadurch gekennzeichnet,**

daß man die Cu-Salzlösung während des Plastifizierens zugibt.

21. Verfahren nach Anspruch 13 oder 14,

**dadurch gekennzeichnet,**

daß die Herstellung des Grünkörpers für die keramische Masse durch naßchemische Verfahren erfolgt.

22. Verfahren nach Anspruch 21,

**dadurch gekennzeichnet,**

daß die Herstellung des Grünkörpermaterials durch Co-Präzipitation, insbesondere nach dem Carbonat-, dem Oxalat-oder dem Schlickerverfahren erfolgt.

23. Verfahren nach Anspruch 21,

**dadurch gekennzeichnet,**

daß die Herstellung des Grünkörpermaterials durch ein Sol-Gel-Verfahren aus einem Medium erfolgt, welches organische Lösungsmittel, insbesondere Essigsäure und Isopropanol enthält.

24. Verfahren nach Anspruch 21,

**dadurch gekennzeichnet,**

daß die Herstellung des Grünkörpermaterials durch ein hydrothermisches Verfahren erfolgt.

25. Verwendung einer keramischen Masse nach einem der Ansprüche 1 bis 12 zur Herstellung von Kondensatoren ohne Korngrenzensperrschichten.

Abb.1

EP 0 503 565 A2

# Abb.2

# Abb.3

### 3A

Temperaturabhängigkeit von Kapazität und Verlustfaktor

C-Abw.[%]

30
20
10
0
-10
-20
-30
-40
-50
-60
-70
-80
-90

40
30
20

tanδ x 10⁻³

-40  -20   0   20   40   60   80   100      Temp.[°C]

———60-30/1 d0.93x
·······60-30/1 o

### 3B

Temperaturabhängigkeit von Kapazität und Verlustfaktor

C-Abw.[%]

30
20
10
0
-10
-20
-30
-40
-50
-60
-70
-80
-90

40
30
20

tanδ x 10⁻³

-40  -20   0   20   40   60   80   100      Temp.[°C]

———60-37 d0.92x
·······60-37 o

### 3C

Temperaturabhängigkeit von Kapazität und Verlustfaktor

C-Abw.[%]

30
20
10
0
-10
-20
-30
-40
-50
-60
-70
-80
-90

40
30
20

tanδ x 10⁻³

-40   -20    0    20    40    60    80    100      Temp.[°C]

———60-38 d0.92x
·······60-38 d0.92o